# EUROPEAN PATENT APPLICATION

(11) **EP 4 056 464 A1**
(43) Date of publication of application: **14.09.2022**
(21) Application number: 22155305.0
(22) Date of filing: 07.02.2022
(51) Int. Cl.: B63C 11/20

(54) **BREATHING APPARATUS FOR SNORKELING**

(30) Priority: 03.03.2021 KR 20210028407
(71) Applicant: Song, In Gyu, Seongnam-si, Gyeonggi-do (KR)
(72) Inventor: Song, In Gyu, Seongnam-si, Gyeonggi-do (KR)
(74) Representative: Fortuna, Jevgenijs

(57) **Abstract**

An object of the present invention is to provide a snorkeling breathing apparatus capable of preventing some of exhalation from inhaling upon inhalation. To this end, the snorkeling breathing apparatus of the present invention includes a mouthpiece; an inhalation unit configured to communicate with the mouthpiece and to open upon inhalation to guide external air to the mouthpiece and close upon exhalation; and an exhalation unit configured to communicate with the mouthpiece and to close upon inhalation and open upon exhalation to discharge the exhalation.

## Description

### Technical Field

The present invention relates to snorkeling.

### Background Art

In general, snorkeling is the act of diving or swimming while the face is put in water without raising the head using a simple pipe-shaped breathing apparatus (also referred to as a "snorkel").

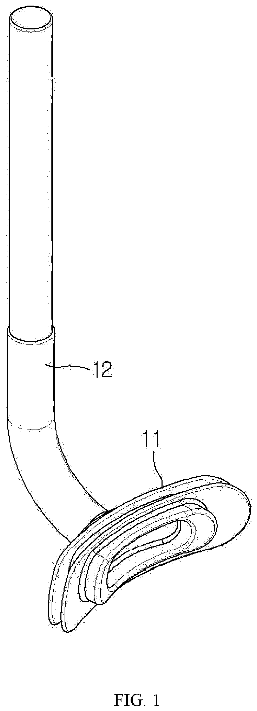

FIG. 1 is a diagram schematically illustrating a conventional snorkeling breathing apparatus.

The conventional snorkeling breathing apparatus, as illustrated in FIG. 1, includes a mouthpiece 11 that a user may bite with a mouth, and a pipe 12 having an inlet communicating with the mouthpiece and an outlet to be exposed out of the water and a predetermined length.

However, since the conventional snorkeling breathing apparatus provides a technical configuration in which inhalation and exhalation are done through one pipe 12, there is a problem of re-inhaling a portion of the exhalation including carbon dioxide upon inhalation.

### Description of the Invention

An object of the present invention is to provide a snorkeling breathing apparatus capable of preventing some of exhalation from inhaling upon inhalation.

Another object of the present invention is to provide a snorkeling breathing apparatus capable of preventing water from being introduced to a user's mouth even if the height of the water surface is changed by waves or the user dives deeply at a predetermined depth.

Yet another object of the present invention is to provide a snorkeling breathing apparatus capable of guiding clean air from which contaminants such as fine dust and the like are filtered to the mouth upon inhalation.

In order to achieve the objects, according to an embodiment of the present invention, a snorkeling breathing apparatus includes a mouthpiece; an inhalation unit configured to communicate with the mouthpiece and to open upon inhalation to guide external air to the mouthpiece and close upon exhalation; and an exhalation unit configured to communicate with the mouthpiece and to close upon inhalation and open upon exhalation to discharge the exhalation.

The inhalation unit may include an inhalation pipe having a front end communicating with the mouthpiece and a terminal end placed on the water surface; and an inhalation check valve which is provided in the inhalation pipe and opens upon inhalation and closes upon exhalation.

As an example, the exhalation unit may include an exhalation pipe communicating with the mouthpiece; and one or more exhalation check valves which are provided in the exhalation pipe and close upon inhalation and open upon exhalation.

The one or more exhalation check valves may include a first exhalation check valve provided on one end of the exhalation pipe and a second exhalation check valve provided on the other end of the exhalation pipe.

As another example, the exhalation unit may include an exhalation port provided on the mouthpiece; and an exhalation check valve which is provided on the exhalation port and close upon inhalation and open upon exhalation.

The exhalation check valve may include a silicone packing covering the exhalation port; and an air discharge hole formed to pass through the silicone packing and allowing the discharge of air while blocking the introduction of water.

The inhalation pipe and the exhalation pipe may be in contact with each other or may be formed as a single body.

The snorkeling breathing apparatus may further include a connection hose provided so that one end thereof communicates with the inhalation unit; and an air bag provided to communicate with the other end of the connection hose filled with air through an air introduction hole.

The connection hose may have a spring shape wound in a coil shape.

The air bag may have a corrugate pipe (called bellows) shape that can be contracted and stretched, so that upon inhalation, the air bag is contracted by a force at which the internal air thereof is discharged to the connection hose, and at times other than inhalation, while the air bag is restored by the self-elasticity, the air is introduced through the air introduction hole.

The air bag may have a shape that gradually increases in diameter downward thereof, and may have a greater thickness of its lower portion than that of its upper portion.

The snorkeling breathing apparatus may further include a filter unit which is provided in communication with the air introduction hole, and blocks the introduction of water into the air introduction hole or filters introduced external air.

The filter unit may include a filter member covering the air introduction hole; and a fixing ring detachably fixing the filter member to the air bag.

As described above, the snorkeling breathing apparatus according to the embodiment of the present invention may have the following effects.

According to the embodiment of the present invention, since the snorkeling breathing apparatus provides a technical configuration including a mouse piece, an inhalation unit, and an exhalation unit, there is a structure in which the inhalation unit and the exhalation unit are individually distinguished as in such a manner that external air is introduced through the inhalation unit upon inhalation and exhalation is emitted through the exhalation unit upon exhalation, thereby preventing a part of the exhalation from inhaling upon the exhalation.

Further, according to the embodiment of the present invention, since provided is a technical configuration in which the inhalation unit includes an inhalation pipe and an inhalation check valve, and the inhalation check valve is opened upon the inhalation and closed upon the exhalation, the exhalation is prevented from moving to the inhalation pipe upon the exhalation, i.e., there is no exhalation in the inhalation pipe, and as a result, fresh external air can be continuously introduced other than the exhalation through the inhalation pipe upon the inhalation.

Further, according to the embodiment of the present invention, since provided is a technical configuration in which the exhalation unit includes an exhalation pipe and one or more exhalation check valves, as an example, and the exhalation check valve is closed upon inhalation and opened upon exhalation, the exhalation or water which exists in the exhalation pipe can be prevented from moving to the mouse piece upon inhalation.

Further, according to the embodiment of the present invention, since provided is a technical configuration in which the exhalation unit includes an exhalation port and the exhalation check valve, as another example, the exhalation pipe can be removed from the exhalation unit of one example described above, thereby simplifying a configuration and reducing a price of a product as compared with the exhalation unit of one example described above.

Further, according to the embodiment of the present invention, since provided is a technical configuration in which a connection hose and an air bag are further included, a height of a water surface varies by waves, and even though a user dives deeply to a set depth, the inhalation unit and the air bag can be connected through the connection hose while the air bag floats on the water surface, and as a result, the water can be introduced into a mouse of the user through the air bag while a dive depth is sufficiently endured through the connection hose.

Further, according to the embodiment of the present invention, since provided is a technical configuration in which the connection hose has a spring form in which the connection hose is rolled in a coil shape, when the user dives deeply to the water, the connection hose can be extended vertically and when the user dives shallowly, the connection hose can be restored and contracted again, and as a result, a phenomenon in which the connection hose is twisted during snorkeling can be prevented and the connection hose keeps a contracted coil shape by restoration force even while the snorkeling is completed, and as a result, it can be easy to keep or manage the connection hose.

Further, according to the embodiment of the present invention, since provided is a technical configuration in which the air bag has a corrugate tube shape which can be contracted and stretched, the air bag can be contracted by force (weak vacuum force) by which internal air of the air bag is discharged to the connection hose upon inhalation, and external air can be filled into the inside of the air bag through an air introduction hole of the air bag while the air bag is restored by elastic force thereof at a time other than the inhalation, and as a result, there is a structure in which air is filled in advance at the time other than the inhalation even though the air introduction hole of the air bag is designed to be small, thereby continuously providing the amount of air required upon inhalation.

Further, according to the embodiment of the present invention, since provided is a technical configuration in which the air bag has a shape in which a diameter gradually increases downwards, and a lower part thereof is formed to have a larger thickness than an upper part thereof, the air bag can keep a state in which the air introduction hole of the air bag faces upwards without falling down on the water surface like a tumbling doll.

Further, according to the embodiment of the present invention, since provided is a technical configuration in which a filter unit is further included, the air can be introduced while introduction of the water is blocked even though the water contacts the filter unit.

Further, according to the embodiment of the present invention, since provided is a technical configuration in which the filter unit includes a filter member and a fixation ring, the filter member can be replaced and when an air filter is used as the filter member, a hole thereof is small as approximately 0.1 mm or less, thereby preventing introduction of the water.

### Description of Drawings

FIG. 1 is a diagram schematically illustrating a conventional snorkeling breathing apparatus.
FIG. 2 is a diagram schematically illustrating a snorkeling breathing apparatus according to a first embodiment of the present invention.
FIG. 3 is a diagram schematically illustrating a snorkeling breathing apparatus according to a second embodiment of the present invention.
FIG. 4 is a diagram schematically illustrating a snorkeling breathing apparatus according to a third embodiment of the present invention.
FIG. 5 is a diagram schematically illustrating a snorkeling breathing apparatus according to a fourth embodiment of the present invention.

### Modes for the Invention

Hereinafter, embodiments of the present invention will be described in detail with reference to the accompanying drawings so as to easily implement those with ordinary skill in the art to which the present invention pertains. However, the present invention may be implemented in various different forms and is not limited to the embodiments described herein.

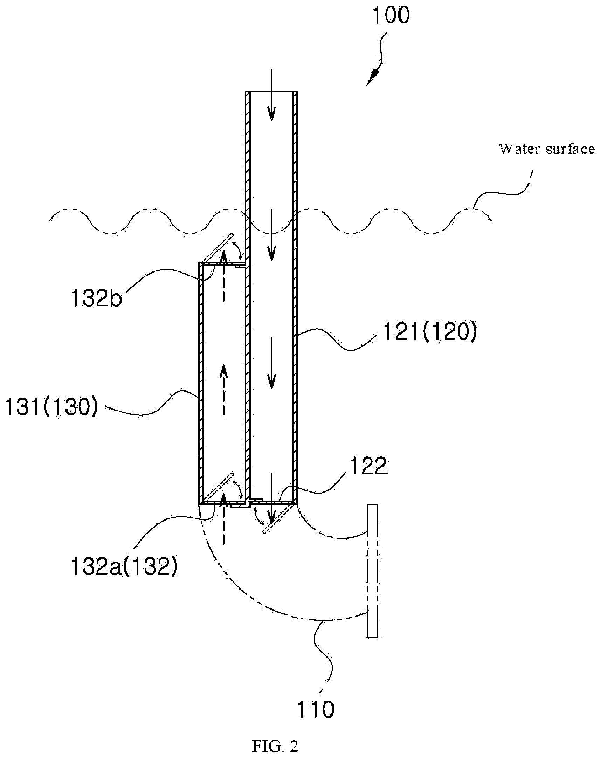

FIG. 2 is a diagram schematically illustrating a snorkeling breathing apparatus according to a first embodiment of the present invention.

As illustrated in FIG. 2, a snorkeling breathing apparatus 100 according to a first embodiment of the present invention includes a mouthpiece 110, an inhalation unit 120, and an exhalation unit 130. Hereinafter, respective components will be described in detail with reference to FIG. 2.

The mouthpiece 110 is a component that is in close contact with a user's mouth when wearing. As illustrated in FIG. 2, the mouthpiece 110 may have a pipe line to communicate with the inhalation unit 120 and the exhalation unit 130.

The inhalation unit 120 is a component for guiding external air to the mouthpiece 110. As illustrated in FIG. 2, the inhalation unit 120 may communicate with the mouthpiece 110, and may have a mechanism to open upon inhalation to guide external air to the mouthpiece 110 and close upon exhalation.

The exhalation unit 130 is a component for discharging the user's exhalation to the outside. As illustrated in FIG. 2, the exhalation unit 130 may communicate with the mouthpiece 110, and may have a mechanism to close upon inhalation and open upon exhalation to discharge the exhalation.

Therefore, since the components are provided, for inhalation and exhalation such as external air is introduced through the inhalation unit 120 upon inhalation, and the exhalation is discharged through the exhalation unit 130 upon exhalation, the inhalation unit 120 and the exhalation unit 130 are separately divided to prevent some of exhalation from being inhaled upon inhalation.

Hereinafter, referring back to FIG. 2, the inhalation unit 120 and the exhalation unit 130 will be described in more detail.

As illustrated in FIG. 2, the inhalation unit 120 may include an inhalation pipe 121 and an inhalation check valve 122. In the inhalation pipe 121, a front end thereof may communicate with the mouthpiece 110 and a terminal end thereof may be placed on the water surface. The inhalation check valve 122 may be provided in the inhalation pipe 121 and may open upon inhalation and close upon exhalation. That is, the inhalation check valve 122 opens only upon inhalation, so that the flow of air may be made only from the inhalation pipe 121 toward the mouthpiece 110. For example, as the inhalation check valve 122, a lift-type check valve, a swing-type check valve, a disk-type check valve, etc. may be used.

Therefore, upon exhalation, the exhalation is blocked from moving to the inhalation pipe 121, that is, there is no exhalation in the inhalation pipe 121, so that upon inhalation, fresh external air instead of exhalation may always be introduced through the inhalation pipe 121.

As illustrated in FIG. 2, the exhalation unit 130 may include an exhalation pipe 131 and one or more exhalation check valves 132. The exhalation pipe 131 may communicate with the mouthpiece 110, and one or more exhalation check valves 132 may be provided in the exhalation pipe 131, and may close upon inhalation and open upon exhalation. That is, the exhalation check valve 132 opens only upon exhalation, so that the flow of air may be made only from the exhalation pipe 131 toward the mouthpiece 110. For example, as the exhalation check valve 132, like the inhalation check valve 122, a lift-type check valve, a swing-type check valve, a disk-type check valve, etc. may be used.

Accordingly, it is possible to block the exhalation or water existing in the exhalation pipe 131 from moving to the mouthpiece 110 at the time of inhalation.

Furthermore, the one or more exhalation check valves 132 may include a first exhalation check valve 132a and a second exhalation check valve 132b, as illustrated in FIG. 2. The first exhalation check valve 132a may be provided at one end of the exhalation pipe 131, and the second exhalation check valve 132b may be provided at the other end of the exhalation pipe 131.

In addition, as illustrated in FIG. 2, as an example, the exhalation pipe 131 and the inhalation pipe 121 may be formed of a single body or may be provided in contact with each other although not illustrated as another example.

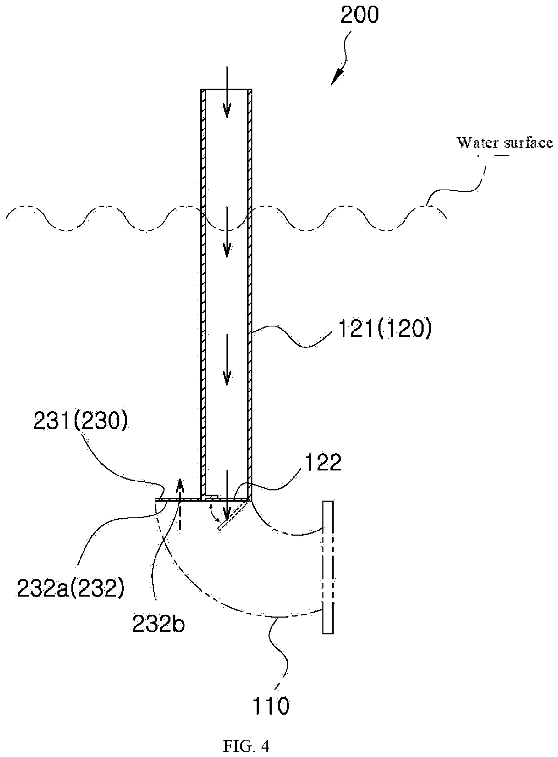

Hereinafter, a snorkeling breathing apparatus 200 according to a second embodiment of the present invention will be described with reference to FIG. 3.

FIG. 3 is a diagram schematically illustrating a snorkeling breathing apparatus according to a second embodiment of the present invention.

As illustrated in FIG. 3, the snorkeling breathing apparatus 200 according to the second embodiment of the present invention is similar to that of the first embodiment of the present invention, except for an exhalation unit 230, and thus, the exhalation unit 230 will be mainly described below.

As illustrated in FIG. 3, the exhalation unit 230 may include an exhalation port 231 and an exhalation check valve 232. The exhalation port 231 may be provided on the mouthpiece 110, and the exhalation check valve 232 may be provided on the exhalation port 231 and may close upon inhalation and open upon exhalation.

For example, the exhalation check valve 232 may include a silicone packing 232a and an air discharge hole 232b. The silicone packing 232a may cover the exhalation port 231, and the air discharge hole 232b may be formed to pass through the silicone packing 232a and may allow the discharge of air while blocking the introduction of water. Furthermore, although not illustrated, the exhalation check valve may further include an auxiliary sealing film made of a thin material which covers the surface facing water of the silicon packing in order to more completely block the introduction of water into the air discharge hole and has an auxiliary hole formed in a position that does not correspond to the air discharge hole. In this case, air may be discharged through the air discharge hole and the auxiliary hole, and water may be blocked while the air discharge hole is blocked by the auxiliary sealing film.

Accordingly, according to the second embodiment of the present invention, the exhalation pipe (see 131 of FIG. 2) of the first embodiment described above may be removed from the exhalation unit 230, thereby simplifying the configuration and reducing the cost of the produce as compared with the exhalation unit (see 130 of FIG. 2) of the first embodiment described above.

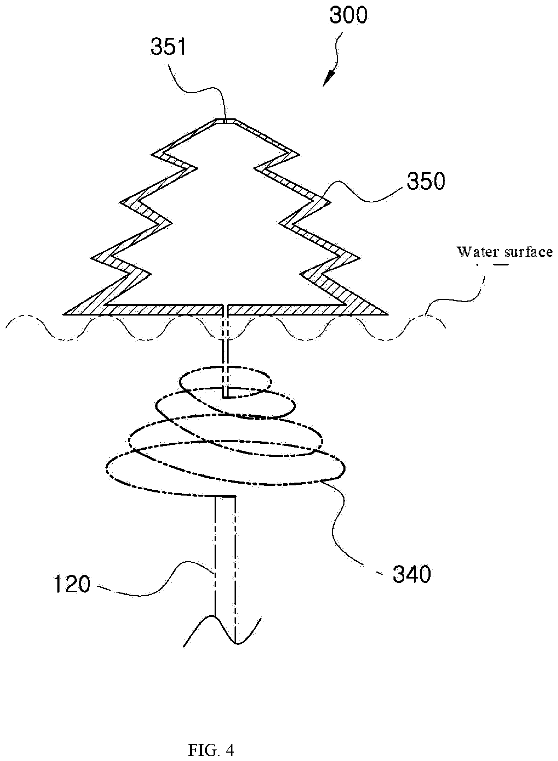

Hereinafter, a snorkeling breathing apparatus 300 according to a third embodiment of the present invention will be described with reference to FIG. 4.

FIG. 4 is a diagram schematically illustrating a snorkeling breathing apparatus according to a third embodiment of the present invention.

As illustrated in FIG. 4, the snorkeling breathing apparatus 300 according to the third embodiment of the present invention is the same as that of the first embodiment or the second embodiment of the present invention described above, except for further including a connection hose 340 and an air bag 350.

The connection hose 340 is a component for connecting the inhalation unit 120 and the air bag 350. Such a connection hose 340 may be provided so that one end thereof communicates with the inhalation unit 120 and the other end thereof communicates with the air bag 350.

The air bag 350 is a component for floating on water and filling a certain amount of external air. The air bag 350 may be provided to communicate with the other end of the connection hose 340 and may be filled with air through an air introduction hole 351. For reference, the air introduction hole 351 may have a small size to block the introduction of water.

Accordingly, even if the height of the water surface is changed by waves or the user dives deeply at a predetermined depth, while the air bag 350 floats on the water surface, the connection hose 340 may be connected between the inhalation unit 120 and the air bag 350 to prevent the water from being introduced to the user's mouth through the air bag 350 while sufficiently affording the diving depth through the connection hose 340.

Furthermore, the connection hose 340 may have a spring shape wound in a coil shape, as illustrated in FIG. 4. Therefore, when the user dives deeply into the water, the connection hose 340 may stretch in a vertical direction, and when the user dives low, the connection hose may be restored and contracted, thereby preventing a phenomenon that the connection hose 340 is twisted during snorkeling. In addition, even after snorkeling is completed, the connection hose 340 is maintained in the coil shape contracted by its restoring force, and thus storage or management may be easy.

In addition, the air bag 350, as illustrated in FIG. 4, may have a corrugate pipe (called bellows) shape that can be contracted and stretched. Therefore, upon inhalation, the air bag 350 may be contracted by a force (weak vacuum force) at which the internal air thereof is discharged to the connection hose 340, and at times other than inhalation, while the air bag is restored by the self-elasticity, external air may be refilled into the inside of the air bag 350 through the air introduction hole 351 of the air bag 350. Accordingly, even if the air introduction hole 351 of the air bag 350 is designed to be small, it is possible to continuously provide a required amount of air upon inhalation because the air is filled in advance at times other than inhalation.

In addition, as illustrated in FIG. 4, the air bag 350 may have a shape that gradually increases in diameter downward thereof, and may have a greater thickness of its lower portion than that of its upper portion. Accordingly, the air bag 350 does not fall over on the water surface like a roly poly, and the air introduction hole 351 of the air bag 350 may be maintained in an upward-facing state.

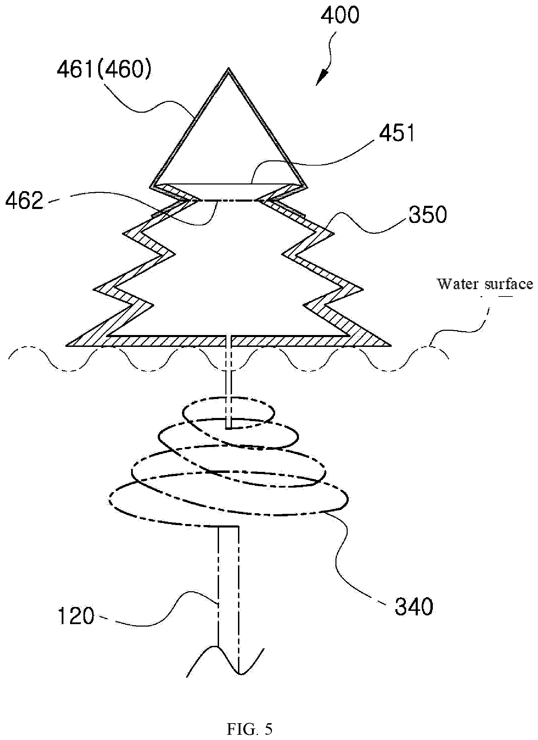

Hereinafter, a snorkeling breathing apparatus 400 according to a fourth embodiment of the present invention will be described with reference to FIG. 5.

FIG. 5 is a diagram schematically illustrating a snorkeling breathing apparatus according to a fourth embodiment of the present invention.

The snorkeling breathing apparatus 400 according to the fourth embodiment of the present invention, as illustrated in FIG. 5, is the same as that of the third embodiment of the present invention, except that the size of an air introduction hole 451 is larger and an air filter unit 460 is further provided, and thus, hereinafter, the differences will be mainly described.

As illustrated in FIG. 5, the filter unit 460 may be provided in communication with the air introduction hole 451, and may block the introduction of water into the air introduction hole 451 or filter introduced external air. Therefore, even when water touches the filter unit due to waves, etc., air may be introduced while blocking the introduction of water.

For example, as illustrated in FIG. 5, the filter unit 460 may include a filter member 461 and a fixing ring 462. The filter member 461 may cover the air introduction hole 451, and the fixing ring 462 may detachably fix the filter member 461 to the air bag 350. Accordingly, the filter member 461 may be replaced through the fixing ring 462, and when an air filter is used as the filter member 461, the hole thereof is small to about 0.1 mm or less to block the introduction of water.

While the preferred embodiment of the present invention has been described in detail, the scope of the present invention is not limited thereto, and various modifications and improvements of those skilled in the art using a basic concept of the present invention defined in the appended claims also belong to the scope of the present invention.

**Explanation of Reference Numerals and Symbols**

| | |
|---|---|
| 100, 200, 300, 400: Snorkeling breathing apparatus | |
| 110: Mouthpiece | 120: Inhalation unit |
| 121: Inhalation pipe | 122: Inhalation check valve |
| 130, 230: Exhalation unit | 131: Exhalation pipe |
| 132, 232: Exhalation check valve | 231: Exhalation port |
| 232a: Silicone packing | 232b: Air discharge hole |
| 340: Connection hose | 350: Air bag |
| 351, 451: Air introduction hole | 460: Filter unit |
| 461: Filter member | 462: Fixing ring |

## Claims

1. A snorkeling breathing apparatus comprising:
a mouthpiece;
an inhalation unit configured to communicate with the mouthpiece and to open upon inhalation to guide external air to the mouthpiece and close upon exhalation; and
an exhalation unit configured to communicate with the mouthpiece and to close upon inhalation and open upon exhalation to discharge the exhalation.

2. The snorkeling breathing apparatus of claim 1, wherein the inhalation unit comprises
an inhalation pipe having a front end communicating with the mouthpiece and a terminal end placed on the water surface; and
an inhalation check valve which is provided in the inhalation pipe and opens upon inhalation and closes upon exhalation.

3. The snorkeling breathing apparatus of claim 1, wherein the exhalation unit comprises
an exhalation pipe communicating with the mouthpiece; and
one or more exhalation check valves which are provided in the exhalation pipe and close upon inhalation and open upon exhalation.
